# EUROPEAN PATENT APPLICATION

(11) **EP 1 376 546 A1**
(43) Date of publication of application: **02.01.2004**
(21) Application number: 02028273.7
(22) Date of filing: 16.12.2002
(51) Int. Cl.: G11B 5/60

(54) **Head used in combination with wide tape media**

(30) Priority: 21.06.2002 US 177090
(71) Applicant: O-Mass AS, Kjelsas, 0411 Oslo (NO)
(72) Inventor: Rubas, Ladislav, 3408 Tranby (NO); Rudi, Guttorm, 1472 Fjellhamar (NO); Raastad, Jorn, 0690 Oslo (NO)
(74) Representative: Tönhardt, Marion, Dr.

(57) **Abstract**

A magnetic recording head arrangement for effecting data transfer relative to a magnetic recording tape moving in a transport direction has a head width which is less than the tape width, as measured in a direction substantially perpendicular to the transport direction. The head is particularly suited for use with wide magnetic recording tape, and has a configuration which minimizes stress in the tape and/or which allows smooth movement of the head in a direction transverse to the transport direction so that the head can be positioned completely beyond the edge of the tape, without damaging the tape upon reentry of the head beneath the tape.

## Description

### BACKGROUND OF THE INVENTION

### Field of the Invention

The present invention is directed to a head for effecting data transfer (i.e. reading and writing) with respect to a magnetic recording tape, and in particular to a head suitable for use with an extremely wide magnetic recording tape.

### Description of the Prior Art and Related Applications

The use of magnetic tape as a medium for data recording has the significant advantages of a relatively low cost and a relatively large recording surface area. Nevertheless, conventional magnetic tape has certain disadvantages associated therewith.

A first of these disadvantages is that tape is a sequential medium, which means that when a data transfer head is located at a beginning of a tape, it is necessary for the tape to be transported along its entire length in order to retrieve (or re-write) information at the end of the tape.

A second disadvantage is that, due to the desire and necessity of storing as much data as possible within an available tape area, the data transfer head technology as well as the recording media technology are pushed to their quality limits.

Moreover, many existing drives and cartridges must be designed within specified form factors, in order to satisfy standardization requirements. As an increasing number of functions become available, which are desired to be accommodated in a drive or on a tape, data storage area or other functions must be sacrificed to accommodate the new, additional functions, or some type of compromise must be reached in the overall design.

Among the more important market requirements which are expected in the near future for data storage on tape is that the need for higher storage capacity will continue to increase, at an even faster rate than previously. As discussed below, for example, the storage capacity of a currently available single cartridge is not sufficient for unattended backup during a longer period of time, and therefore so-called autoloader and library systems have been developed to automatically insert and remove a number of cartridges in a sequence.

Further market requirements are expected to be a need for faster time to access data, a need for an increased data transfer rate, a lower cost per MB (megabyte) and an overall improved quality and reduced cost.

As noted above, the limited data storage capacity of conventional cartridges has resulted in the development of autoloader and library systems. Conventional autoloader systems, however, are not a satisfactory solution to the problem of storing a large amount of data in an unattended backup procedure over a relatively long period of time. Several disadvantages exist with regard to currently available autoloader and library systems.

Because such autoloader and library systems make use of a large number of cartridges, the cartridges are made relatively small, and therefore have a limited space available for use for data storage. Typically, six to ten of such cartridges must be put in a magazine in an autoloader in order to have sufficient storage area (capacity). Because of the relatively small size of the cartridges, the drive is also made small, in order to match standardized form factors. The drive is disposed in a system housing, which also contains robotics, electronics and software needed for loading an unloading the cartridges.

The relatively large number of components, and therefore the relatively high cost, associated with conventional autoloader and library systems makes the use of such systems an unattractive alternative for a customer who merely wants long term data backup.

To address these problems, a tape cartridge and a drive for extremely wide tape are disclosed in co-pending United States Application Serial No. 691,165, filed October 19, 2000, the teachings of which are incorporated herein by reference. The tape cartridge and drive described therein accommodate tape having an extremely wide width, such as a width that is greater than approximately 24 mm, or in a range between approximately 24 mm and approximately 127 mm.

The width of this extremely wide tape, therefore, is greater than that of a conventional magnetic recording tape by a factor of up to 6 to 10 times. Because the tape has this extremely wide width, the total tape length can be made significantly shorter while still making the same total area available for data storage. Making the tape shorter, however, requires less time for winding and unwinding the tape from the hubs on which it is carried in order to access data at a particular location on the tape.

It is important, however, that the housing for accommodating such extremely wide tape have the same, or substantially the same, form factor as conventional recording cartridges, so as to be accommodated in the openings for conventional tape cartridges in tape drives and auto loaders and library magazines. This means that the axes of rotation of the tape hubs in cartridges for accommodating extremely wide tape will proceed parallel to a "longer" dimension of the cartridge housing, rather than perpendicular to the shortest dimension (height) as in a conventional cartridge housing. Given a length of extremely wide tape which is necessary to provide approximately the same total area available for recording data on the tape as a conventionally sized tape, such a length of extremely wide tape can be accommodated in a housing having a height which is comparable to the height of a conventional tape cartridge only when the tape is substantially evenly distributed in respective tape packs on the two hubs in the housing. When any significant amount of extremely wide tape is wound onto one of the hubs, the diameter on the tape pack on that hub increases beyond the standard height of a conventional cartridge housing.

This problem could be addressed by simply providing a lesser length of extremely wide tape in the cartridge, so that even when all of the tape is wound on one tape hub in one tape pack, the diameter of that tape pack still would not exceed the height of a standard tape cartridge.

This would defeat one of the advantages of employing extremely wide tape, however, by decreasing the total area available for recording data.

To allow a longer length of wide magnetic recording tape to be accommodated in a tape cartridge having a size which conforms to a standard form factor, co-pending United States Application Serial No. 09/859,328, filed May 16, 2001, the teachings of which are incorporated herein by reference, discloses a tape cartridge for wide magnetic tape wherein the cartridge housing is formed by two parts which are slidable relative to each other along the direction of the housing height. When the two cartridge portions are in a non-expanded state, the cartridge exhibits a standard form factor, so that it can be inserted into conventionally sized openings in storage and drive equipment. After insertion in a tape drive of the type also disclosed in this co-pending application, the housing portions are slidably moved apart so as to have an interior spacing therebetween which allows substantially all of the tape to be wound in a single tape pack on one of the hubs. For storage purposes, the tape is wound in two tape packs of substantially equal diameter on the respective hubs, thereby allowing the aforementioned standard form factor to be maintained, but in use, as noted above, it is possible for all of the tape to wound on only one of the hubs, without being limited by the interior dimension of the cartridge. A drive for such a cartridge is disclosed in co-pending application Serial No. 10/052,826 filed November 7, 2001, the teachings of which also are incorporated herein by reference.

In the normal combination of a conventional (i.e. non-wide) tape and recording head, the width of the head is larger than the width of the tape, so that the head provides support across the entire width of the tape. The width of the head is typically twice the width of a conventional tape. This is partly due to the fact that the write/read elements, which are usually located in a central part of the head, must have access to any location on the tape, across the entirety of its width. The conventional approach wherein the width of the head is larger than the width of the tape, however, would lead to several disadvantages as the width of the tape increases.

Moreover, many existing drives and tape media cartridges must be designed within specified form factors, in order to satisfy standardization requirements. Requirements for head width based on conventional head and media combinations will limit the utilization of very wide tape media within a particular form factor.

Another disadvantage of simply making the head larger is that the mass of the head will increase together with increase width, unless new materials are devised which are less dense than conventionally-employed head materials. Because many systems require dynamic movement of the head in order to compensate for dynamic misalignment between the write/read elements and the tape, an increase mass of the head will result in much higher demands being made on any type of system involving dynamic movement of the head, due to the increased inertia associated with a head having a larger mass.

Another disadvantage is that a conventional recording head is not designed to enter the tape medium in the transverse direction without causing damage to the tape. There are several practical reasons why it is desirable for the head to be able to be positioned beyond the tape width such as, for example, to be able to perform a head cleaning operation outside of the tape, while the tape remains loaded in the system.

Another disadvantage with simply making a wider head will result in increased friction in the direction of tape movement, and it will require a larger power consumption of the tape drive motors in order to provide sufficient tape media tension.

A further disadvantage of simply making the head wider is that such a wider head would only have a limited possibility to accommodate localized, out-of-plain distortions of the tape media. These out of plane distortions may cause problems with head to media interface, as very close and controlled spacing between head and tape media is required. This disadvantage could be countered by increasing the tape tension, but this solution would have other unwanted disadvantages associated therewith.

Several of the above-mentioned disadvantages have been encountered and solved in the case of recording media such as floppy discs, wherein the head is smaller than the recording medium. Such solutions are not transferable to the use of tape as a recording medium, however, because a floppy disc is approximately 10 times thicker than a conventional recording tape. This thickness difference also produces a significant increase in stiffness, and thereby creates significantly different head-to-medium interface conditions from those which exist with regard to the use of tape as a recording medium. Moreover, the movement of a floppy disc is rotational, in contrast to the linear movement exhibited by tape media.

### SUMMARY OF THE INVENTION

It is an object of the present invention to provide a solution to the head and tape combination in the context of a wide tape, wherein the increase of the tape width does not require any increase in the width, and thus the size, of the head.

It is a further object of the present invention to reduce the cost of a head suitable for use with wide tape media. Further object is to provide a solution as described above wherein the increase in the tape width does not require any increase in the mass of the head.

Another object is to provide a solution as described above which allows the head to enter beneath the tape in a direction perpendicular to the tape movement without damaging the tape edges. A further object is to provide a solution as described above wherein the problems associated with the concentration of high stress on the tape medium are avoided, thereby minimizing the possibility of permanent deformation and/or rupture of the tape. In this context, it is an object of the present invention to provide a flat head solution that allows low penetration for use with a wide tape and does keep the stress level lower than 100 Mpa.

A further object of the present invention is to decrease the frictional forces in the direction of the tape movement associated with the use of a recording head with a wider tape, while still allowing adequate tape tension to be maintained. An associated object is the reduce the frictional forces in the direction of head movement, i.e., transverse to the direction of tape movement.

These objects are achieved in accordance with the principals of the present invention in a magnetic recording head having a head width that is narrower than the tape width of the tape with which the head is to be used. For both the head and the tape, the term "width" means the dimension perpendicular to the transport direction of the tape. The width of both the head and the tape, therefore, is measured in the direction referred to the transverse direction in the earlier discussion.

The head is particularly suitable for use with wide magnetic recording tape of the type described above, but the principals and advantages are obtained in any relative dimensioning of the head and the tape wherein the head width is narrower than the tape width. As used herein, therefore, "wide tape" means any tape within a width range between about 12.7 mm (1/2") to about 127 mm (5").

In an embodiment, the head has a curved shape at side sections of the head which mechanically interact with the tape, in order to reduce stress in the tape produced by the head being narrower than the tape width.

In a further embodiment, the head has a configuration that allows the head to be positioned outside of the tape width, i.e. completely beyond an edge of the tape, thereby allowing the head to be cleaned in a head cleaning procedure while the tape remains loaded in the system.

In further embodiments, suitable head-to-tape contact is achieved without the need for positive head-to-tape penetration. In one version of this embodiment, the surface of the head which faces the tape is provided with an electrostatic zone, that is not electrically conductive.

### DESCRIPTION OF THE DRAWINGS

Figure 1 is a perspective view, with the cartridge housing removed, of an example of a drive for wide magnetic recording tape showing the tape hubs, on which the wide magnetic recording tape is wound, engaging respective drive shafts of the drive, in which a head constructed and operating in accordance with the principals of the present invention can be used.
Figure 2 is a schematic plan view of the relationship between the inventive recording head and the recording tape.
Figure 3 shows the inventive recording head positioned between tape guides, without any tape present.
Figure 4 is a schematic view, as seen from the front of the tape drive in Figure 1, showing the inventive head position between the tape guides.
Figure 5 repeats the view of Figure 4, with tape being present showing positive penetration and a positive wrap of the tape around the edges of the head.
Figure 6 repeats the view of Figure 5, but with no penetration and no wrap.
Figure 7 repeats the view of Figure 6, with addition of a pressure pad to assist in producing head-to-tape contact.
Figure 8 repeats the view of Figure 6, with an air pressure source for providing suitable head-to-tape contact by air pressure.
Figure 9 is a schematic view as seen in the tape movement direction illustrating the inventive head with positive tape penetration, in a version wherein the central section of the head is flat.
Figure 10 illustrates the embodiment of Figure 9, with the inventive head positioned completely beyond the edge of the tape, such as for cleaning purposes.
Figure 11 is a view as seen in the tape movement direction of an embodiment of the inventive head with positive penetration, wherein the central section of the head is curved.
Figures 12, 13 and 14 are plan views of the inventive head in an embodiment wherein the surface of the head facing the tape has an electrostatic zone, showing three versions with respectively different configurations of the electrostatic zone.

### DESCRIPTION OF THE PREFERRED EMBODIMENTS

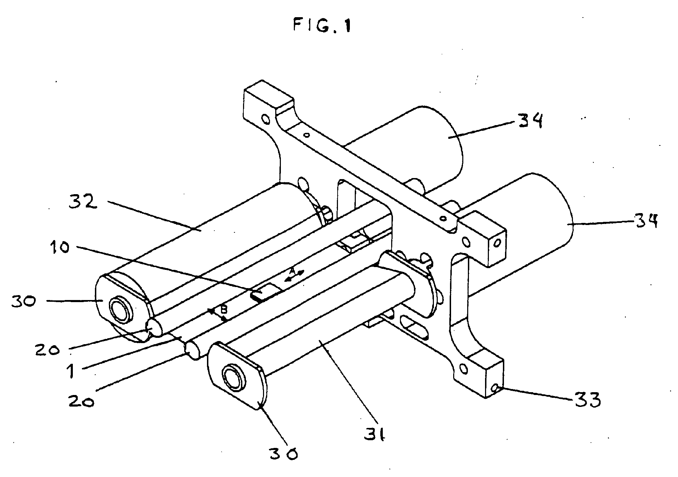

A generalized perspective view of a tape drive serving as an example of a drive for wide recording tape (wide tape media) is shown in Figure 1. This drive is of the type disclosed in the aforementioned co-pending patent applications. The tape 1 in Figure 1 is supported by tape guides 20, and is wound on tape packs 31 and 32 that are rotationally driven by motors 34 mounted to a frame 33. Control of the motors 34, in combination with the tape guides 20, provides the necessary tensioning of the tape 1 as it is transported in the direction B across a magnetic recording (i.e. read and/or write) head 10. Flanges 30 keep the tape 1 in the respective tape packs 31 and 32 as it is wound and unwound. The data tracks on the tape 1 proceed substantially parallel to the transport direction B, and the head 10 is positioned relative to a desired track by movement of the head 10 in the direction of the double arrow A, by a suitable head positioning mechanism, which is not shown in Figure 1 but which is described in detail in the aforementioned co-pending applications.

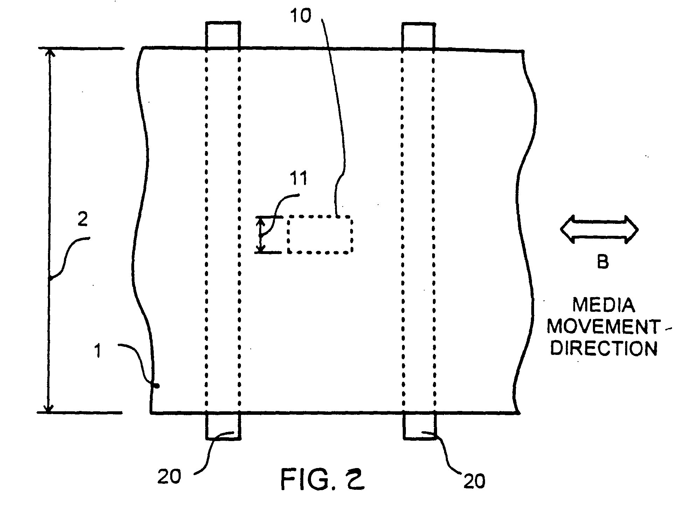

As schematically illustrated in Figure 2, the tape 1 has a tape width 2, as measured in a direction perpendicular to the tape movement direction B, and is supported by the tape guides 20 across this width 2. As can also be seen in Figure 2, the head 10 has a head width 11 which is narrower than the tape width 2.

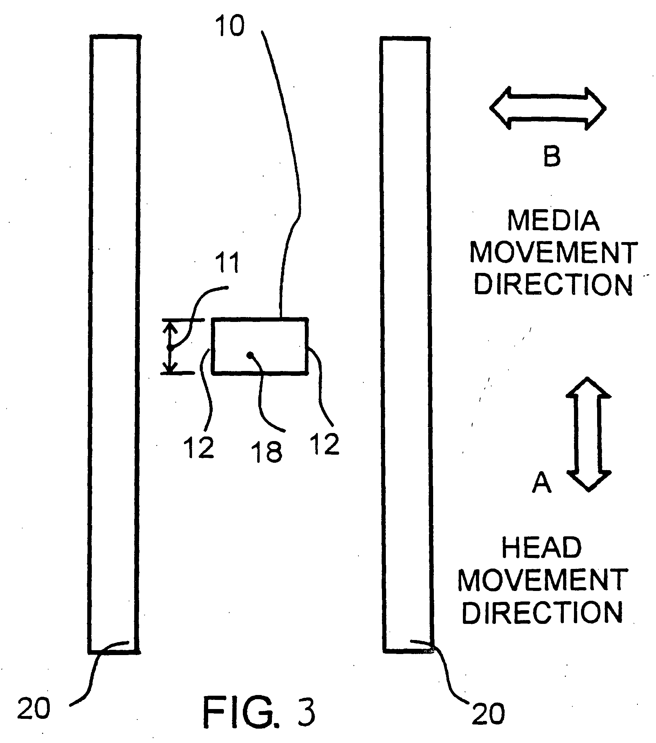

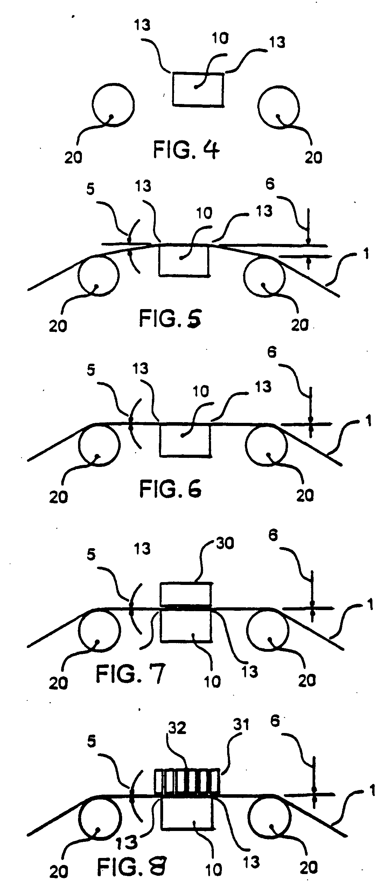

Figure 3 shows the arrangement of Figure 2, but with the tape 1 removed. As shown in Figure 3, the head 10 has a head surface 18 which faces the tape 1 when the tape 1 is present. The head 10 has at least one substantially straight leading edge 12, proceeding perpendicular to the media movement direction B and parallel head movement direction A.

As seen in the schematic illustration in Figure 4, which shows the tape guides 20 and the head 10 in the drive of Figure 1 looking toward the head 10 in the direction A, the head 10 has at least one substantially square leading edge 13. Figure 5 shows an embodiment wherein the tape 1 wraps around the leading edges 13 with a wrap angle 5. In this embodiment, the head 10 has a penetration depth 6 into the tape 1, and for this embodiment the positive wrap angle 5 is necessary in order to provide contact between the tape 1 and the leading edge 13. The substantially square leading edge 13 removes the air stream which unavoidable follows the tape 1 as it is moved across the head 10, and thus provides under pressure at the side of the tape 1 facing the head 10. This under pressure (suction) generates a force perpendicular to the surface 18 (Fig. 3), thereby providing a sufficient head-to-tape contact.

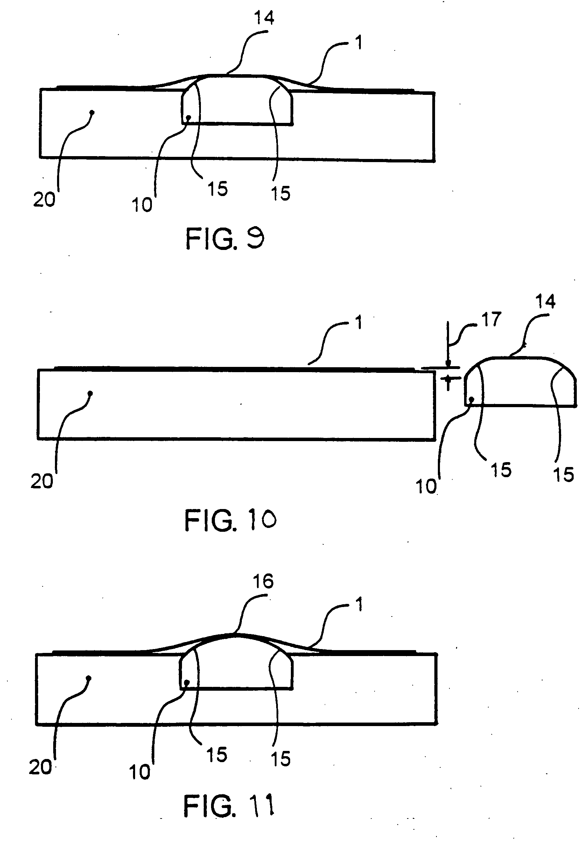

Figure 6 shows that the head 10 does not necessarily require the positive penetration 6, however, if positive penetration 6 is not present, the force needed to achieve sufficient head-to-tape contact must be provided by other means. One alternative for providing such a force is shown in Figure 7, wherein a pad 30 is disposed at a side of the tape 1 opposite to the side facing the head 10. The head 30 is lightly pressed against the tape 1 so as to provide a force sufficient to achieve adequate head-to-tape contact. In the version shown in Figure 8, a nozzle pad 31 is disposed at the side of the tape 1 opposite the side thereof facing the head 10. The nozzle pad 31 has a number of nozzles 32 therein which expel air against the tape 1 to provide the necessary force for producing adequate head-to-tape contact. As can be seen in each of the Figures 6, 7 and 8, the wrap angle 5 is 0° and the penetration depth 6 is zero.

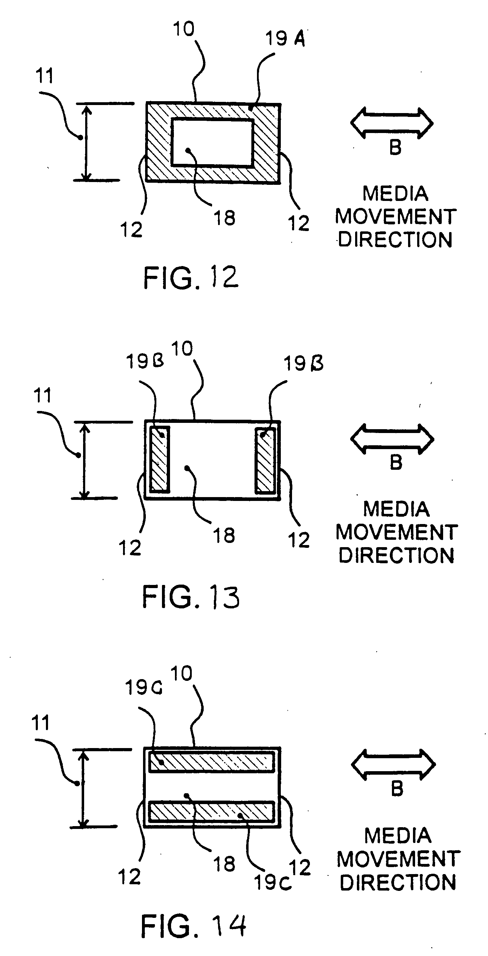

Another embodiment for providing the necessary head-to-tape contact is shown in Figures 12, 13 and 14, wherein an electrostatic zone is provided on the surface 18 of the head 10 that faces the tape 1. The electrostatic zone is not electrically conductive. In the version shown in Figure 12, the electrostatic zone is formed by a continuous region 19A, in the form of a rectangular frame at the periphery of the surface 18. In the version shown in Figure 13, the electrostatic zone is formed by regions 19B disposed substantially parallel to the edges 12 of the head 10. In the version shown in Figure 14, the electrostatic zone is formed by regions 19C, proceeding between the edges 12 substantially parallel to the media movement direction B.

Figure 9 is a view of an embodiment of the inventive head 10 as seen in the direction of tape media movement B, wherein the guides 20 are formed by a block. In the embodiment shown in Figure 9, the head 10 has a substantially planar central region 14, and two side regions 15. The side regions 15 are curved so as to allow the head 1 to smoothly exit the tape 1 in the direction of head movement A. This allows the head 10 to be positioned completely beyond the edge of the tape 1, as shown in Figure 10. This is advantageous to allow the head to be moved to such a position for conducting a head cleaning procedure, while the tape 1 is still loaded in the system. Figure 10 shows the margin 17 which is necessary for entering the head 10 beneath the tape 1 without causing damage to the tape 1, similar to the positive penetration depth 6 described above.

Figure 11 shows a further embodiment for achieving the same result, wherein the curves of the side regions 15 are continued across the entirety of the surface of the head 10 that faces the tape 1, so that a curved central region 16 results.

Although modifications and changes may be suggested by those skilled in the art, it is the intention of the inventors to embody within the patent warranted hereon all changes and modifications as reasonably and properly come within the scope of their contribution to the art.

The features disclosed in the foregoing description, in the claims and/or in the accompanying drawings may, both separately and in any combination thereof, be material for realising the invention in diverse forms thereof.

## Claims

1. A magnetic head arrangement for data transfer relative to a magnetic recording tape moved in a transport direction, said tape having a tape width perpendicular to said transport direction, said magnetic recording arrangement comprising a magnetic recording head having a head width perpendicular to said transport direction which is less than said tape width.

2. A magnetic head arrangement as claimed in claim 1 wherein said magnetic head has a head surface facing toward said tape, said head surface having a leading edge at which tape enters said head and an opposite edge at which said tape exits said surface, said leading edge being perpendicular to said transport direction.

3. A recording head arrangement as claimed in claim 2 wherein said head has two side surfaces respectfully adjoining said leading edge and said opposite edge, said side surfaces each being disposed at between 70° an 110° relative to said head surface facing said tape.

4. A recording head arrangement as claimed in claim 2 wherein said head surface facing said tape has a central region disposed between said leading edge and said opposite edge, said central region being planar.

5. A recording head arrangement as claimed in claim 2 wherein said head surface facing said tape has two side regions respectively disposed between said central region and said leading edge and said opposite edge in said transport direction, said side regions being curved so that said central region is disposed above a plane containing said leading edge and said opposite edge.

6. A recording head arrangement as claimed in claim 2 wherein said head surface facing said tape has two side regions disposed between said leading edge and said opposite edge and said central region and said transport direction, said side regions and said central region being curved to form a continuous curved surface between said leading edge and said opposite edge.

7. A recording head arrangement as claimed in claim 2 wherein said head surface facing said tape is entirely planar between said leading edge and said opposite edge.

8. A recording head arrangement as claimed in claim 7 further comprising a pressure pad disposed above said head surface facing said tape, with said tape adapted to move in said transport direction between said pressure pad and said head surface, said pressure pad being adapted to exert a mechanical pressure on said tape to produce contact between said tape and said head surface for data transfer therebetween.

9. A recording head arrangement as claimed in claim 7 further comprising a nozzle pad disposed above said head surface facing said tape with said tape adapted to move in said transport direction between said nozzle pad and said head surface, said nozzle pad having at least one nozzle therein for expelling air towards said tape to produce air pressure for maintaining contact between said tape and said head surface for data transfer therebetween.

10. A recording head arrangement as claimed in claim 7 wherein said recording head comprises an electrostatic zone disposed on said head surface facing said tape.

11. A recording head arrangement as claimed in claim 10 wherein said electrostatic zone comprises a substantially rectangular frame-shaped region having a substantially rectangular centrally disposed opening therein exposing said head surface.

12. A recording head arrangement as claimed in claim 10 wherein said electrostatic zone comprises two sub-zones respectively disposed at opposite ends of said head surface adjacent said leading edge and said opposite edge and proceeding substantially parallel to said leading edge and said opposite edge, said sub-zones being spaces from each other to expose said head surface between said sub-zones.

13. A recording head arrangement as claimed in claim 10 wherein said electrostatic zone comprises two sub-zones proceeding substantially parallel to and spaced from each other between said leading edge and said opposite edge, exposing said head surface between said sub-zones and between said leading edge and said opposite edge.

14. A recording head arrangement as claimed in claim 1 wherein said magnetic head has a planar head surface facing toward said tape, and wherein said magnetic recording head is adapted to effect data transfer relative to said magnetic recording tape with a low penetration into said magnetic recording tape.
